# EUROPÄISCHE PATENTSCHRIFT

(11) **EP 3 359 274 B1**
(45) Veröffentlichungstag und Bekanntmachung des Hinweises auf die Patenterteilung: **06.04.2022**
(21) Anmeldenummer: 16777530.3
(22) Anmeldetag: 05.10.2016
(51) Int. Cl.: B01D 37/04, B01D 25/00, B01D 25/12

(54) **FILTERPRESSE, VERWENDUNG EINES ELEKTROMAGNETISCH ARBEITENDEN SENSORS IN DERSELBEN SOWIE PLATTENFÖRMIGES FILTERELEMENT**
FILTER PRESS, USE OF AN ELECTROMAGNETICALLY OPERATING SENSOR IN THE SAME AND FILTERING ELEMENT IN PLATE FORM
FILTRE-PRESSE, UTILISATION D'UN CAPTEUR FONCTIONNANT DE MANIÈRE ÉLECTROMAGNÉTIQUE DANS CELUI-CI ET ÉLÉMENT DE FILTRE EN FORME DE PLAQUE

(30) Priorität: 06.10.2015 DE 102015012887
(43) Veröffentlichungstag der Anmeldung: 15.08.2018
(73) Patentinhaber: IMKO Micromodultechnik GmbH, 76275 Ettlingen (DE)
(72) Erfinder: KÖHLER, Kurt, 76275 Ettlingen (DE)
(74) Vertreter: Andres, Angelika Maria
(86) Internationale Anmeldenummer: PCT/EP2016/001644
(87) Internationale Veröffentlichungsnummer: WO 2017/059956

(56) Entgegenhaltungen:
- EP-A1- 0 701 852
- KR-B1- 101 308 170
- US-A- 4 627 914

## Beschreibung

Die Erfindung befasst sich mit einer Filterpresse zur Fest-Flüssig-Trennung von Suspensionen, umfassend mehrere hintereinander geschaltete, randseitig zusammengespannte, plattenförmige Filterelemente mit einer Presswand, einem Plattenrahmen und einem Filtermittel, wie Gewebe oder Membran, einen Suspensionseinlass und einen Filtratauslass, wobei zwischen jeweils zwei angrenzenden und benachbarten Filterelementen Kuchenräume vorhanden sind, in welchen sich im Betriebszustand Filterkuchen aufbauen, sowie mit einer Verwendung eines elektromagnetisch arbeitenden Sensors in derselben. Bei Filterpressen dieser Art handelt es sich um diskontinuierlich arbeitende Druckfilter. Ferner betrifft die Erfindung ein plattenförmiges Filterelement zur Fest-Flüssig-Trennung von Suspensionen, mit wenigstens einer Presswand und mindestens einer Bohrung zur Ableitung des Filtrats von der Presswand zu einem Filtratablauf.

Aus DE 38 31 377 C1 ist eine Filterplatte für Filterelemente einer Filterpresse bekannt, bei der es sich um eine Kammerfilterpresse handelt.

Aus DE 41 19 166 A1 ist ein Filterelement für eine Filterpresse der vorstehend genannten Art bekannt, bei der es sich um eine sogenannte Membranfilterpresse handelt.

Aus EP 0 478 815 B1 und EP 1 359 410 B1 sind Vorrichtungen zur Materialfeuchtemessung und Vorrichtungen zur Bestimmung der Feuchtigkeit eines Untergrundes bekannt. Hierbei werden Messsonden oder Messsensoren eingesetzt, welche elektromagnetisch arbeiten und zwei beabstandete Leiterelektroden aufweisen. Diese Materialfeuchtsensoren erfassen und ermitteln jeweils eine Dielektrizitätskonstante eines Materials und aus dieser Dielektrizitätskonstanten wird über entsprechende elektronische Verarbeitungseinrichtungen die Feuchtigkeit oder der Wassergehalt eines zu untersuchenden Materials, wie eines Untergrunds, eines Estrichs oder dergleichen ermittelt.

Aus DE 10 2011 056 548 A1 ist dem Fachmann ein Feuchtesensor Messeinrichtung zum Ermitteln des Feuchtegehalts eines Materials bekannt, die einen Feuchtesensor mit zwei beanstandeten Leiterelektroden aufweist, der mit Hilfe der Dielektrizitätskonstante, welche feuchteabhängig ist, die Feuchte eines untersuchten Materials bestimmen kann. Die Messeinrichtung hat mehrere voneinander beabstandete Elektroden, die in einem feuchtigkeitsdurchlässigen Polyestervlies fixiert sind, welches nochmals in ein mineralisch gebundenes, feuchtigkeitsweiterleidendes Hüllmaterial eingebettet ist.

Aus DE 101 53 353 A1 offenbart eine Vorrichtung zur Bestimmung des Restflüssigkeitsgehaltes von Feststoffkuchen in Zentrifugen, die zwei zueinander beabstandete Elektroden zur Leitfähigkeits- oder Kapazitätsmessung aufweist. Die Elektroden durchsetzen die Umfangswand der Zentrifugentrommel und ragen mit ihren freien Enden in den Feststoffkuchen.

Die KR 101 308 170 B1 offenbart eine Filterpresse mit mehreren hintereinander geschalteten Filterelementen, zwischen denen Kuchenräume gebildet sind. Die Filterelemente sind mit Hilfe eines Arbeitszylinders zusammenpressbar. Zur Messung der Feuchtigkeit in dem Filterkuchen ist an der Presswand eines Filterelements ein in der Patentschrift nicht näher definierter Feuchtigkeitssensor angeordnet, der mit einem Ende in die Presswand eingelassen ist und mit seinem anderen Ende in den an die Presswand angrenzenden Kuchenraum hineinragt.

Die EP 0 701 852 A1 offenbart eine Vorrichtung zur automatischen Steuerung von Filterpressen, die einen kapazitiven Sensor zur Messung des Wassergehalts in den Filterkuchenräumen der Filterpresse aufweist. Der Sensor ist in einer Rohrleitung angeordnet, die außerhalb der Filterpresse angeordnet und mit dieser verbunden ist. In der Rohrleitung ist eine kalibrierte Öffnung vorgesehen, die derart mit dem Sensor zusammenwirkt, dass er mit seiner Längsachse relativ zu der Öffnung bewegbar ist.

Zum prozessoptimierten Betreiben von Filterpressen zur Fest-Flüssig-Trennung von Suspensionen der eingangs genannten Art und zur Sicherstellung eines verfahrensökonomischen Betriebs derselben bedarf es bisher einer großen und umfangreichen Erfahrung von Seiten des Bedienungspersonals, um insbesondere auch den Feuchtigkeitswert bzw. den Wassergehaltswert und gegebenenfalls die Zusammensetzung des im Betriebszustand in der Filterpresse aufgebauten Filterkuchens abzuschätzen, so dass dann die Filterkuchen ausgetragen werden können, wozu eine solche Filterpresse abzuschalten ist.

Die Erfindung zielt darauf ab, eine Filterpresse der vorstehend genannten Art derart auszubilden, dass erfahrungsunabhängig Filterpressen dieser Art möglichst effizient und weitgehend frei von Betriebsstörungen betrieben werden können. Auch soll eine Verwendung eines elektromagnetisch arbeitenden Sensors bei einer solchen Filterpresse zur Fest-Flüssig-Trennung von Suspensionen bereitgestellt werden. Ferner besteht die Aufgabe, ein plattenförmiges Filterelement anzugeben, das erfahrungsunabhängig möglichst effizient und weitgehend frei von Betriebsstörungen in einer Filterpresse betrieben werden kann.

Einerseits wird hierzu eine Filterpresse zur Fest-Flüssig-Trennung von Suspensionen umfassend mehrere, hintereinander geschaltete, randseitig zusammengespannt, plattenförmige Filterelemente mit einer Presswand aus einem elektrisch isolierenden, feuchtigkeitsundurchlässigen Werkstoff, einem Plattenrahmen und einem Filtermittel, wie Gewebe oder Membran, einem Suspensionseinlass und einem Filtratauslass bereitgestellt, wobei zwischen jeweils zwei angrenzenden und benachbarten Filterelementen Kuchenräume vorhanden sind, in welchen sich im Betriebszustand Filterkuchen aufbauen, wobei in der Presswand mindestens eines Filterelements wenigstens ein elektromagnetisch arbeitender Sensor angeordnet ist, der zum Bestimmen der Dielektrizitätskonstante mindestens eines an der Presswand angeordneten Filterkuchens zwei voneinander beabstandete Leiterelektroden aufweist, die durch die Presswand von dem Kuchenraum beabstandet sind, und wobei der Sensor mit einer Auswerteeinrichtung zum Ermitteln eines Wassergehaltswerts und/oder eines Leitfähigkeitswerts verbunden ist. Die Filterpresse zur Fest-Flüssig-Trennung von Suspensionen umfassend mehrere, hintereinander geschaltete, randseitig zusammengespannt, plattenförmige Filterelemente mit einer Presswand aus einem elektrisch isolierenden, feuchtigkeitsundurchlässigen Werkstoff, einem Plattenrahmen und einem Filtermittel, wie Gewebe oder Membran, einem Suspensionseinlass und einem Filtratauslass, wobei zwischen jeweils zwei angrenzenden und benachbarten Filterelementen Kuchenräume vorhanden sind, in welchen sich im Betriebszustand Filterkuchen aufbauen, zeichnet sich dadurch aus, dass wenigstens einer Presswand ein elektromagnetisch arbeitender und zwei beabstandete Leiterelektroden aufweisender Sensor zugeordnet ist, wobei der Sensor die Dielektrizitätskonstante der beidseitig der Presswand jedes Filterelements gebildeten Filterkuchen bestimmt, und hieraus über eine Auswerteeinrichtung einen Wassergehaltswert und gegebenenfalls einen Leitfähigkeitswert ermittelt.

Der nach der Erfindung vorgesehene elektromagnetisch arbeitende Sensor mit zwei beabstandeten Leiterelektroden kann somit zuverlässig, zeitnah, in Echtzeit und während des Filterpressenbetriebs über die Dielektrizitätskonstante der Filterkuchen den Wassergehalt und die Feuchtigkeit des im Betriebszustand gebildeten Filterkuchens und/oder die Leitfähigkeit desselben erfassen. Hierdurch lassen sich die Prozessparameter der Filterpresse erfahrungsunabhängig erfassen und der Betriebsablauf der Filterpresse oder der Filterprozess lässt sich hierdurch optimieren und verfahrensökonomisch steuern. Die Auswerteeinrichtung ist bevorzugt derart ausgestaltet, dass sie das mit Hilfe der Leiterelektroden erfasste Messsignal dynamisch auswertet, also Veränderungen im Messsignal detektiert. Dies hat gegenüber einem Vergleich der Messsignals mit festen Referenzwerten der Vorteil, dass keine Referenzmessungen zur Bestimmung der Referenzwerte durchgeführt werden müssen. Die Messung des Leitfähigkeitswerts ist insbesondere beim Filtern von Suspensionen vorteilhaft, die mit einem Salz beflockt sind.

Bei einer bevorzugten Ausführungsform der Erfindung besteht die Presswand aus einem Kunststoff.

Vorzugsweise nimmt die Auswerteeinrichtung eine Temperaturkompensation bei der erfassten Dielektrizitätskonstanten vor, so dass auch die Betriebstemperaturen mit berücksichtigt werden.

Bei einer vorteilhaften Ausgestaltung der Erfindung sind die Leiterelektroden des Sensors quer und insbesondere normal zu der Ebene, in der sich die Presswand erstreckt, voneinander beabstandet. Dadurch ist es möglich, für beidseits der Presswand gebildete Filterkuchen den Wassergehaltswert und/oder Leitfähigkeitswert zu bestimmen.

Vorzugsweise ist der Sensor quer zu der Ebene, in der sich die Presswand erstreckt, mittig in der Presswand angeordnet, so dass er zuverlässig insbesondere den Mittelbereich des Filterkuchens beidseitig der Presswand erfassen kann und die beiden beabstandeten Leiterelektroden insbesondere an der kritischen Stelle des Filterkuchenaufbaus angeordnet sind.

Bei einer weiteren bevorzugten Ausführungsform können die Leiterelektroden des Sensors unmittelbar in die Presswand integriert sein. Hierbei können zusätzliche Bearbeitungen, wie das Einbringen einer Bohrung in die Presswand vermieden werden, in welche dann der elektromagnetisch arbeitende Sensor eingepresst wird. Auch lassen sich auf diese Weise Materialschwächungen der Presswand wirksam verhindern.

Bei einer vorteilhaften Ausgestaltung der Erfindung hat die Presswand des Filterelements an ihrer dem Kuchenraum zugewandter Oberfläche einen zur Leiterelektrode des Filterelements benachbarten ersten Oberflächenbereich und einen weiter von dieser entfernten zweiten Oberflächenbereich, wobei der erste Oberflächenbereich eben ausgestaltet ist und der zweite Oberflächenbereich vorstehende Noppen aufweist. Dadurch kann das flüssige Filtrat zwischen den Noppen zum Filtratablauf gut hin abgeleitet werden. Da das Filtrat die Messgenauigkeit des Sensors beinträchtigen kann, sind im ersten Oberflächenbereich, also im Detektionsbereich der Leiterelektrode, keine Noppen vorgesehen.

Bei einem Filter, der eine Blasvorrichtung hat, mittels welcher das Filtrat zwischen den Noppen aus dem Filterkuchen entfernt werden kann, kann die dem Kuchenraum bzw. dem Filterkuchen zugewandte Oberfläche bei Bedarf auch im Detektionsbereich der Leiterelektrode Noppen aufweisen.

Ferner wird nach der Erfindung eine Verwendung eines elektromagnetisch arbeitenden, zwei beabstandeten Leiterelektroden aufweisenden Sensors bereitgestellt, welche sich dadurch auszeichnet, dass der Sensor derart in einer Filterpresse zur Fest-Flüssig-Trennung von Suspensionen zur Erfassung der Dielektrizitätskonstanten mindestens eines zwischen den Filterelementen der Filterpresse im Betriebszustand gebildeten Filterkuchens eingesetzt wird, dass die Leiterelektroden durch den elektrisch isolierenden, feuchtigkeitsundurchlässigen Werkstoff der Presswand vom Filterkuchen beabstandet sind und sich von den Leiterelektroden elektromagnetische Messfelder durch den elektrisch isolierenden, feuchtigkeitsundurchlässigen Werkstoff der Presswand hindurch in den mindestens einen Filterkuchen erstrecken, und der Sensor aus der Dielektrizitätskonstante einen Wassergehaltswert und/oder einen Leitfähigkeitswert des mindestens einen Filterkuchens ermittelt. Die Verwendung eines elektromagnetisch arbeitenden, zwei beabstandeten Leiterelektroden aufweisenden Sensors zeichnet sich dadurch aus, dass der Sensor in einer Filterpresse zur Fest-Flüssig-Trennung von Suspensionen zur Erfassung der Dielektrizitätskonstanten von zwischen den Filterelementen der Filterpresse im Betriebszustand gebildeten Filterkuchen eingesetzt wird, und der Sensor aus der Dielektrizitätskonstante einen Wassergehaltswert und gegebenenfalls einen Leitfähigkeitswert des oder der Filterkuchen ermittelt.

Eine derartigen Verwendung eines elektromagnetisch arbeitenden und zwei beabstandete Leiterelektroden aufweisenden Sensors mit einer diskontinuierlich arbeitenden Filterpresse in Form eines Druckfilters ermöglicht es, dass sich die Filterpresse unter optimierten Betriebsbedingungen und entsprechend verfahrensökonomischen Prozessparametern betreiben lässt, und sich Betriebsstörungen wirkungsvoll vermeiden lassen.

Vorteilhaft ist, wenn als Werkstoff für die Presswand ein Kunststoff verwendet wird.

Bei einer bevorzugten Ausgestaltung der Verwendung werden die Leiterelektroden des Sensors derart in der Presswand angeordnet, dass sie quer zu der Ebene, in der sich die Presswand erstreckt, voneinander beabstandet sind. Das zwischen den Leiterelektroden angeordnete elektromagnetische Messfeld kann sich dann in beide, an den einander abgewandten Seiten der Presswand angeordnete Filterkuchen erstrecken.

Bevorzugter Weise ist der Sensor bei der Verwendung wenigstens einer Presswand des Filterelements zugeordnet. Insbesondere kann der Sensor mittig in der Presswand des Filterelements angeordnet sein. Hierdurch lassen sich die Wassergehaltswerte und gegebenenfalls die Leitfähigkeitswerte insbesondere am kritischen Mittelbereich des im Betriebszustand aufgebauten Filterkuchens zuverlässig ermitteln.

Bezüglich des plattenförmigen Filterelements zur Fest-Flüssig-Trennung von Suspensionen, mit wenigstens einer Presswand und mindestens einer Bohrung zur Ableitung des Filtrats von der Presswand zu einem Filtratablauf, wobei die Presswand aus einem elektrisch isolierenden, feuchtigkeitsundurchlässigen Werkstoff besteht, wird die vorstehend genannte Aufgabe mit den folgenden Merkmalen gelöst. Diese sehen vor, dass in der Presswand wenigstens ein elektromagnetisch arbeitender Sensor angeordnet ist, der zum Bestimmen der Dielektrizitätskonstante mindestens eines an der Presswand angeordneten Filterkuchens zwei voneinander beabstandete Leiterelektroden aufweist, die durch die Presswand von einem daran angrenzenden Kuchenraum beabstandet sind.

Weitere vorteilhafte Ausgestaltungen der Erfindung sind in den Unteransprüchen angegeben.

Zusammenfassend ist es nach der Erfindung wesentlich, dass auf zuverlässige und erfahrungsunabhängige Weise sowie mit konstruktiv relativ einfachen und störungsunanfälligen Mitteln insbesondere der Feuchtigkeitsgehalt oder der Wassergehalt des während des Betriebszustands einer Filterpresse aufgebauten Filterkuchens erfasst werden kann und hiervon abhängig gegebenenfalls entsprechende Prozessparameter beeinflusst und gesteuert werden können.

Die Erfindung wird nachfolgend unter Bezugnahme auf die beigefügte Zeichnung an Hand von bevorzugten, aber nicht beschränkenden Ausführungsbeispielen näher erläutert. Darin zeigen:
- Fig. 1: eine schematische Prinzipskizze einer Filterpresse üblicher Bauart,
- Fig. 2: eine schematische Ansicht einer bevorzugten Ausführungsform einer Filterpresse nach der Erfindung,
- Fig. 3a und 3b: jeweils eine Schnittansicht eines einzelnen Filterelements in Form eines Kammerfilterelements einer Filterpresse,
- Fig.4: eine schematische Schnittansicht von mehreren nebeneinander angeordneten Kammerfilterelementen und einem Sensor nach der Erfindung,
- Fig. 5: eine vergrößerte Ausschnittsansicht des in Fig. 4 mit A bezeichneten Bereichs,
- Fig.6: eine schematische Schnittansicht eines einzelnen Membranfilterele-ments vor der Filterkuchenbildung,
- Fig.7: eine schematische Schnittansicht mehrere nebeneinander angeordneter oder hintereinander geschalteter Membranfilterelemente zur Verdeutlichung der Zuordnung des Sensors nach der Erfindung, und
- Fig. 8: eine schematische Schnittansicht mehrerer hintereinander geschalteter Membranfilterelemente entsprechend Fig. 7 mit Filterkuchenaufbau und Veränderung der Lage der elastischen Pressmembran.

In den Figuren der Zeichnung werden gleiche oder ähnliche Teile mit denselben Bezugszeichen versehen.

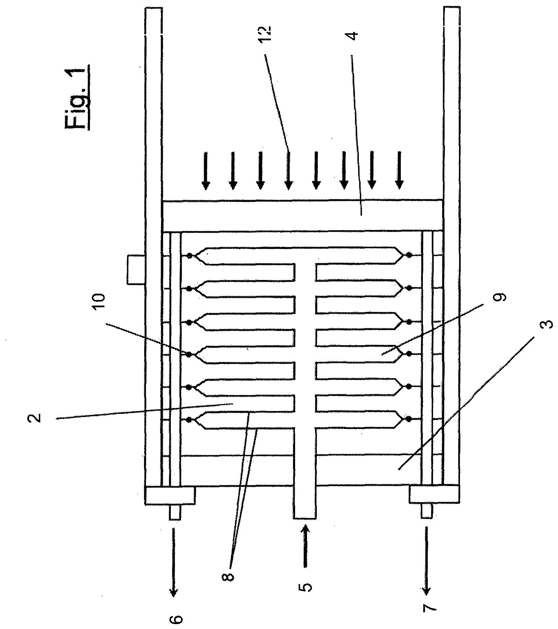

In Figur 1 ist eine schematische Schnittansicht einer insgesamt mit 1 bezeichneten Filterpresse üblicher Bauart dargestellt. Diese Filterpresse 1 umfasst mehrere hintereinander geschaltete, randseitig zusammengespannte, plattenförmige Filterelemente 2, welche zwischen einer Gegenhalterplatte 3 und einer Anpressplatte 4 angeordnet sind. Die Anpressplatte 4 ist mittels einer in der Zeichnung nicht näher dargestellten Anpressvorrichtung mit einer Presskraft beaufschlagbar, die in Fig. 1 durch Kraftpfeile 12 angedeutet ist. Ferner umfasst die dargestellte Filterpresse 1 zur Fest-Flüssig-Trennung von Suspensionen einen Suspensions-Zulauf 5, welcher bei der dargestellte Ausführungsform zentrisch und mittig angeordnet ist, und Waschwasserbohrungen bzw. Filtratabläufe 6, 7, welche am äußeren Randbereich der Filterelemente 2 angeordnet sind und über nicht näher dargestellte Rinnensysteme mit den Filterelementen 2 kommunizierend verbunden sind.

Zwischen jeweils angrenzenden und benachbarten Filterelementen 2 bilden sich Kuchenräume 8, in welchen sich schematisch angedeutete Filterkuchen 9 aufbauen können, wenn bei dem Betrieb der Filterpresse 1 die Anpressplatte 4 hydraulisch und/oder mechanisch gegen die Gegenhalterplatte 3 gedrückt wird.

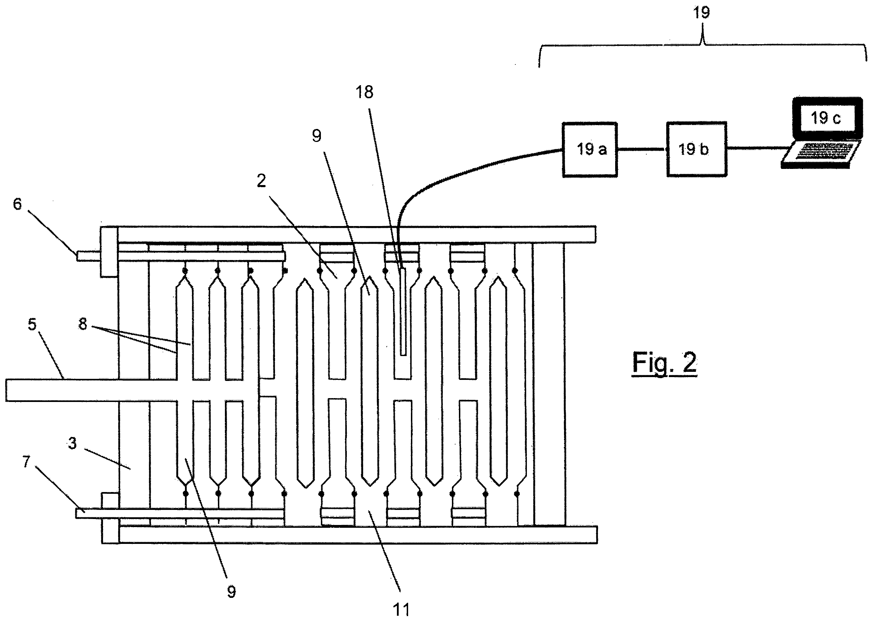

In Figur 2 ist schematisch eine Filterpresse dargestellt, welche dort insgesamt mit 1' bezeichnet ist. Der Grundaufbau der Filterpresse 1' hinsichtlich den Filterelementen und weiteren Einzelheiten entspricht der Auslegung der Filterpresse 1 nach Figur 1. Daher werden diese Einzelheiten nicht nochmals erläutert. Wie auch schematisch in Figur 1 angedeutet ist, sind die Filter-Kuchenräume 8 mittels entsprechender Dichtungen 10 abgedichtet. In Figur 2 ist ferner eine Ausführungsvariante dargestellt zur Verdeutlichung der Möglichkeit, den in den Kuchenräumen 8 aufgebauten Filterkuchen 9 entweder manuell oder gegebenenfalls auch automatisch auszuwerfen, wie dies mit einem Pfeil 11 zur Andeutung des Filterkuchenauswurfs dargestellt ist.

Auch umfasst die erfindungsgemäße Filterpresse 1' nach Figur 2 einen elektromagnetisch arbeitenden Sensor 18, welcher beim dargestellten Beispiel zwei beabstandete Leiterelektroden 18a aufweist. Der Sensor 18 ist derart in einer Presswand 21 eines Filterelements 2; 20; 30 angeordnet, dass die Leiterelektroden 18a durch den Werkstoff der Presswand von dem Kuchenraum 8 beabstandet sind. Der Sensor 18 ist etwa mittig in einer Presswand 21 des Filterelements 2 angeordnet. Dieser Sensor 18 bestimmt die Dielektrizitätskonstante der beidseitig der Presswand 21 jedes Filterelements 2 gebildeten Filterkuchen 9. Über eine Auswerteeinrichtung 19 werden hieraus ein Wassergehaltswert und gegebenenfalls ein Leitfähigkeitswert ermittelt. Die Auswerteeinrichtung 19 kann gegebenenfalls eine Temperaturkompensation vornehmen. Die Messfrequenz liegt zweckmäßigerweise in einem Bereich von 300 MHz und 1,5 GHz, um möglichst wenige Störeinflüsse durch Störgrößen, wie elektrische Leitfähigkeit, Temperatur etc., bei der Bestimmung der Dielektrizitätskonstanten zu haben.

Obgleich nicht näher dargestellt ist, kann/können die Leiterelektrode(n) 18a des Sensors 18 auch direkt in die Presswand 21 integriert sein. Auch in diesem Fall sind die Leiterelektroden 18a durch den Werkstoff der Presswand von dem Kuchenraum 8 beabstandet.

Mit dem mit Hilfe des Sensors 18 und die Auswerteeinrichtung 19 ermittelten Feuchtigkeitswerten und gegebenenfalls entsprechender Werte für die Leitfähigkeit des Filterkuchens 9 werden in geeigneter Weise zur Optimierung der Prozessparameter der Filterpresse 1' auf die Steuerung derselben eingewirkt. Wie ferner aus Figur 2 zu ersehen ist, umfasst die Auswerteeinrichtung 19 eine Sensorauswerteeinrichtung 19a, eine Regelung 19b und eine Anzeige- und Überwachungseinrichtung 19c.

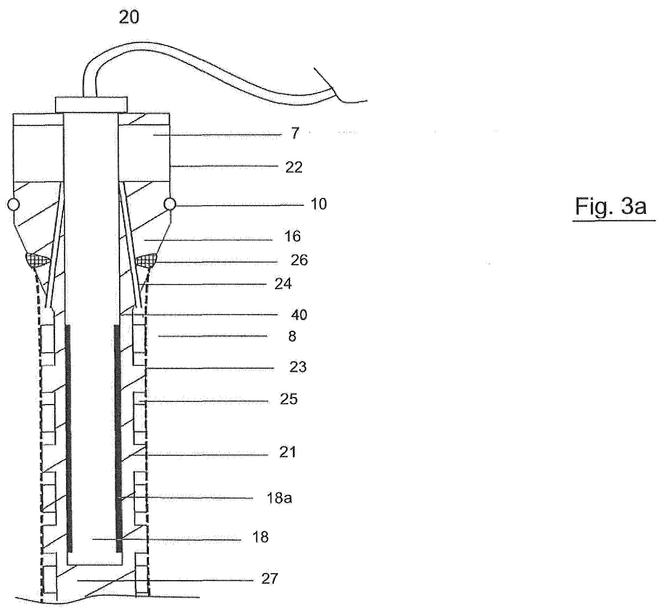

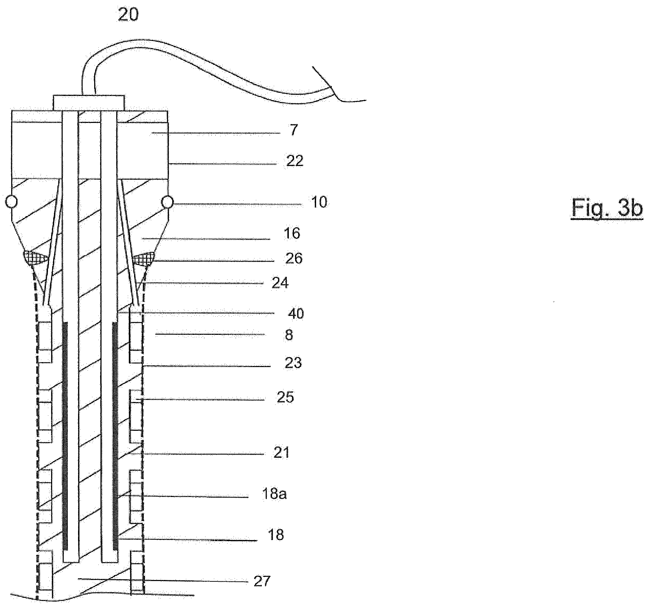

Das in den Figuren 3a und 3b gezeigte Filterelement 2 ist als Kammerfilterelement 20 ausgebildet. Das Filterelement 20 umfasst eine Presswand 21, einen Plattenrahmen 22 und ein Filtermittel 23 bzw. ein Filtermedium, bei dem es sich um ein Gewebe, eine Membran oder ein Filtertuch handeln kann, wie dies in Figur 3 schematisch in gebrochenen Linien eingetragen ist. Über Bohrungen 24 kann das Filtrat aus den einzelnen Filterelementen 2, 20 ausgehend von einem nicht näher dargestellten Rinnensystem 25 im Bereich der Erstreckung der Presswand 21 mit dem Filtratablauf 6 bzw. 7 nach Figur 1 oder, wie in Figur 3 dargestellt, mit dem Filtratablauf 6 abgeleitet werden. An den Stirnwänden des Filterelements 2, 20 baut sich dann in den dort gebildeten Kuchenräumen 8 ein Filterkuchen 9 auf. Über dem Rinnensystem 25 des Kammerfilterelements 20 nach Figur 3 ist ein Filtermittel 23 bzw. Filtermedium, wie zum Beispiel eine Filtermembran bzw. ein Filtertuch, gespannt. Die Dichtungen 26 zwischen aneinandergrenzenden Filterelementen 2 sind in Figur 3 ebenfalls verdeutlicht. Zusätzlich ist noch eine Dichtung 10 für das Filtermittel 23, wie die Filtermembran, angedeutet.

Fig. 3b zeigt in Abwandlung zu Fig. 3a ein Kammerfilterelement 20, bei dem die beiden Leiterelektroden 18a des Sensors 18 räumlich getrennt und gesondert der Presswand 21 zugeordnet sind.

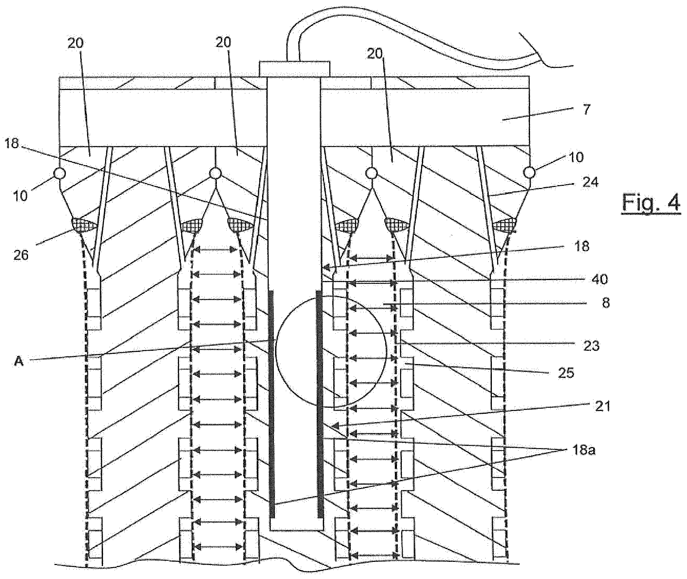

Unter Bezugnahme auf Figur 4 ist eine Anordnung von mehreren nebeneinander angeordneten Kammerfilterelementen 20 verdeutlicht. Hieraus ist zu erkennen, dass ein elektromagnetisch arbeitender und zwei beabstandete Leiterelektroden 18a aufweisender Sensor 18 die Dielektrizitätskonstante der beidseitig der Presswand 21 jedes Filterelements 20 gebildeten Filterkuchen 9 bestimmt. Hieraus werden dann mittels wenigstens eines einzigen Sensors 18 die entsprechenden Werte von zwei nebeneinander liegenden Filterkuchen 9 bestimmt und hieraus mittels der Auswerteeinrichtung 19 der Wassergehaltswert und gegebenenfalls ein Leitfähigkeitswert ermittelt.

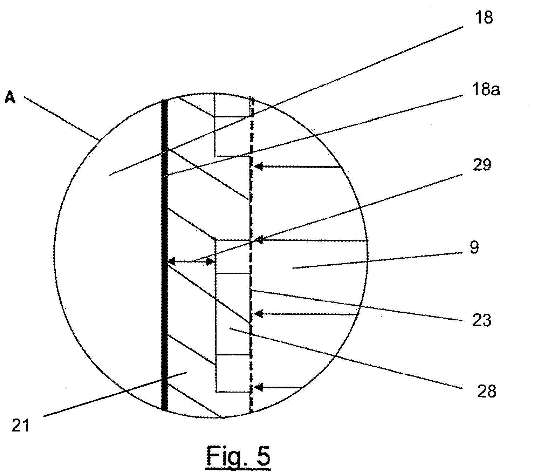

Figur 5 zeigt einen vergrößerten Ausschnitt des Bereichs A in Figur 4. Eine Filterplatte 27 des Filterelements 20 hat vorstehende Noppen 28, gegen welche das Filtermittel 23 bzw. Filtermedium, wie ein Filtertuch, anliegen. Ein mit 29 bezeichneter Abstand von Leiterelektrode 18a der Sonde 18 zum Grund der Noppen 28 der Filterplatte 27 beträgt vorzugsweise 1,5 mm bis 10 mm, in bevorzugter Weise 2 bis 4 mm. Auch hat sich gezeigt, dass je länger die Sonde 18 in der axialen Erstreckung ausgelegt ist, umso besser die Messqualität wird. Diese Längenwerte belaufen sich beispielsweise auf 100 mm bis 400 mm, und bevorzugt liegt eine Länge in einem Bereich von 200 mm bis 300 mm.

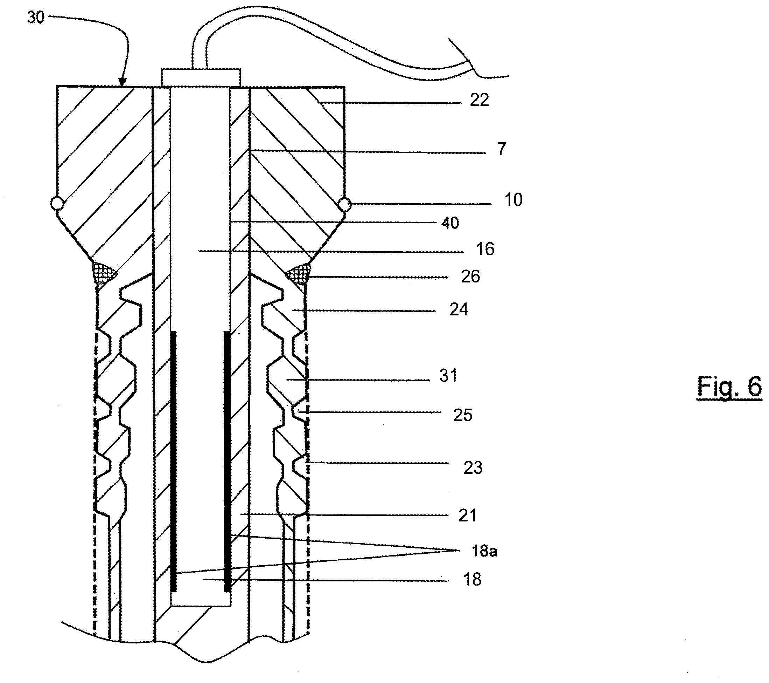

Unter Bezugnahme auf Figur 6 wird eine weitere Ausgestaltungsform des Filterelements 2 verdeutlicht, welches in Form eines Membranfilterelements 30 ausgelegt ist. Gleiche oder ähnliche Teile wie bei dem Filterelement 2, 20, welche zuvor unter Figur 3 erläutert sind, sind in Figur 6 mit denselben Bezugszeichen versehen und werden nicht nochmals näher erläutert. Bei einem Membranfilter 30 ist zusätzlich eine flexible bzw. elastische Pressmembran 31 vorgesehen, welche den in den Kuchenräumen 8 sich aufbauenden Filterkuchen 9 so beaufschlagt, dass der gebildete Filterkuchen 9 nach der Filtration mit Hilfe der Pressmembran 31 nachgepresst werden kann. Der Sensor 18 mit seinen beiden beabstandeten Leiterelektroden 18a ist etwa mittig in der Presswand 21 angeordnet und - wie schematisch angedeutet - über entsprechende Leitungen mit der nicht näher dargestellten Auswerteeinrichtung 19 (siehe Figur 2) verbunden.

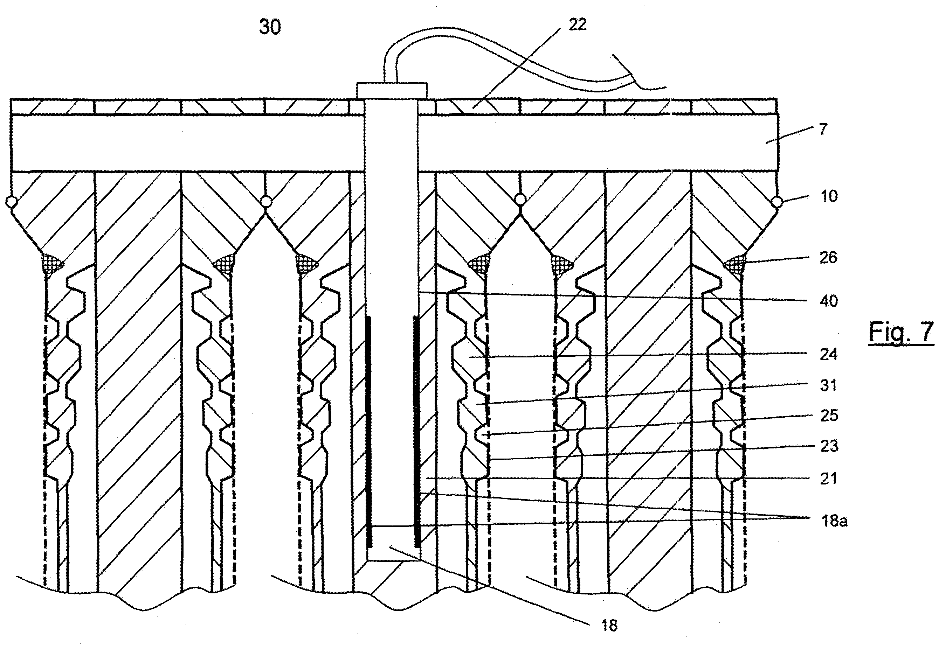

In Figur 7 ist in einer schematischen Schnittansicht eine Anordnung aus mehreren nebeneinander angeordneten Membranfilterelementen 30 gezeigt. Hieraus ist zu ersehen, dass die elektromagnetisch arbeitende Sonde 18 die Dielektrizitätskonstante von Filterkuchen 9 in benachbarten Filterelementen 30 aufgebauten Kuchenräumen 8 erfassen kann. Alle weiteren Einzelheiten in Figur 7 entsprechend im Wesentlichen jenen, welche in Figur 6 gezeigt sind.

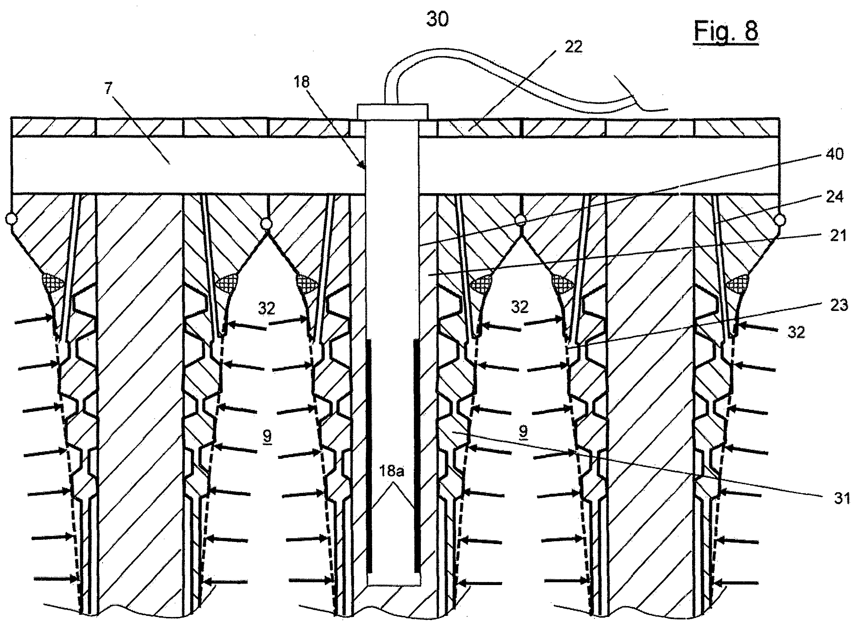

Figur 8 schließlich zeigt in einer schematischen Schnittansicht ausgehend von Figur 7, bei der die Membranfilterelemente im Grundzustand ohne aufgebauten Filterkuchen 9 verdeutlicht sind, die Membranfilterelemente 30 in einem Betriebszustand, wobei sich mit den in den Kuchenraum 8 aufbauenden Filterkuchen 9 die Lage ausgehend von der Position der Pressmembran 31 in Figur 7 vor der Filterkuchenbildung diese entsprechend in Figur 8 verdeutlicht ist und wie dort mit angedeuteten Kraftpfeilen 32 in Richtung auf die Presswand 21, elastisch gedrückt wird, so dass der im Kuchenraum 8 aufgebaute Filterkuchen 9 mittels elastischen Pressmembranen 31 nochmals nachgepresst wird. Mit Hilfe des elektromagnetisch arbeitenden Sensors 18 wird dann die Dielektrizitätskonstante in den beiden benachbarten, aufgebauten Filterkuchen 9 erfasst, aus welcher dann mittels der Auswerteeinrichtung 19 in Figur 2 entsprechende Wassergehaltswerte und gegebenenfalls Leitfähigkeitswerte der Filterkuchen 9 ermittelt werden.

Der Sensor 18 nach der Erfindung wird bei den dargestellten Ausführungsformen in eine in die Presswand 21 eingebrachte Bohrung 40 eingepresst. Alternativ kann der Sensor 18 aber auch unmittelbar in die Presswand 21 integriert sein, indem dort die beabstandeten Leiterelektroden 18a unmittelbar in das Material der Presswand eingebettet sind. Erwähnt werden soll noch, dass das Bezugszeichen 16 eine Biegezone der Presswand 21 bezeichnet.

Obgleich die Erfindung voranstehend an Hand von bevorzugten Ausführungsformen erläutert worden ist, können die elektromagnetisch arbeitenden Sensoren 18 einem oder mehreren Filterelementen 2, 20, 30 zugeordnet sein, oder der Sensor 18 kann auch gegebenenfalls an bevorzugten kritischen Bereichen der Filterpresse 1, 1' eingesetzt und angeordnet werden.

Gegebenenfalls kann auch ergänzend oder kombiniert hiermit wenigstens ein berührungslos arbeitender Sensor zur Erfassung der Presswandbelastung an wenigstens einem Filterelement angeordnet sein.

Wie ferner aus den Figuren der Zeichnung zu ersehen ist, gibt die Erfindung auch die Verwendung eines elektromagnetisch arbeitenden und zwei beabstandete Leiterelektroden 18a aufweisenden Sensors 18 an, mit der Maßgabe, dass der Sensor 18 in einer Filterpresse 1' zur Fest-Flüssig-Trennung von Suspensionen zu Erfassung der Dielektrizitätskonstanten von zwischen den Filterelementen 2, 20, 30 der Filterpresse 1, 1' im Betriebszustand gebildeten Filterkuchens 9 eingesetzt wird, und der Sensor 18 aus der Dielektrizitätskonstante den Wassergehaltswert und gegebenenfalls einen Leitfähigkeitswert des oder der Filterkuchens/en ermittelt.

## Patentansprüche

1. Filterpresse zur Fest-Flüssig-Trennung von Suspensionen umfassend mehrere, hintereinander geschaltete, randseitig zusammengespannte, plattenförmige Filterelemente (2; 20; 30) mit einer Presswand (21) aus einem elektrisch isolierenden, feuchtigkeitsundurchlässigen Werkstoff, einem Plattenrahmen (22) und einem Filtermittel (23), wie Gewebe oder Membran, einen Suspensionseinlass (5) und einen Filtratauslass (6, 7), wobei jeweils zwischen zwei angrenzenden und benachbarten Filterelementen (2; 20; 30) Kuchenräume (8) vorhanden sind, in welchen sich im Betriebszustand Filterkuchen (9) aufbauen, **dadurch gekennzeichnet, dass** in der Presswand (21) mindestens eines Filterelements (2; 20; 30) wenigstens ein elektromagnetisch arbeitender Sensor (18) angeordnet ist, der zum Bestimmen der Dielektrizitätskonstante mindestens eines an der Presswand (21) angeordneten Filterkuchens (9) zwei voneinander beabstandete Leiterelektroden (18a) aufweist, die durch die Presswand (21) von dem Kuchenraum (8) beabstandet sind, und dass der Sensor (18) mit einer Auswerteeinrichtung (19) zum Ermitteln eines Wassergehaltswerts und/oder eines Leitfähigkeitswerts verbunden ist.

2. Filterpresse nach Anspruch 1, **dadurch gekennzeichnet, dass** die Presswand (21) aus Kunststoff besteht.

3. Filterpresse nach Anspruch 1 oder 2, **dadurch gekennzeichnet, dass** die Leiterelektroden (18a) des Sensors (18) quer und insbesondere normal zu der Ebene, in der sich die Presswand (21) erstreckt, voneinander beabstandet sind.

4. Filterpresse nach einem der Ansprüche 1 bis 3, **dadurch gekennzeichnet, dass** der Sensor (18) quer zu der Ebene, in der sich die Presswand (21) erstreckt, mittig in der Presswand (21) angeordnet ist.

5. Filterpresse nach einem der Ansprüche 1 bis 4, **dadurch gekennzeichnet, dass** die Leiterelektroden (18a) des Sensors (18) in die Presswand (21) integriert sind.

6. Filterpresse nach einem der Ansprüche 1 bis 5, **dadurch gekennzeichnet, dass** die Schichtdicke des zwischen den Leiterelektroden (18a) und dem dazu benachbarten Kuchenraum (8) befindlichen Werkstoff der Presswand (21) kleiner als 5 Millimeter, insbesondere kleiner als 4 Millimeter und bevorzugt kleiner als 3 Millimeter ist.

7. Filterpresse nach einem der Ansprüche 1 bis 6, **dadurch gekennzeichnet, dass** die Presswand (21) des Filterelements (20) an ihrer dem Kuchenraum (8) zugewandter Oberfläche einen zur Leiterelektrode (18a) des Filterelements (20) benachbarten ersten Oberflächenbereich und einen weiter von dieser entfernten zweiten Oberflächenbereich hat, und dass der erste Oberflächenbereich eben ausgestaltet ist und der zweite Oberflächenbereich vorstehende Noppen (28) aufweist.

8. Verwendung eines elektromagnetisch arbeitenden und zwei beabstandete Leiterelektroden (18a) aufweisenden Sensors (18), **dadurch gekennzeichnet, dass** der Sensor (18) derart in einer Filterpresse (1') zur Fest-Flüssig-Trennung von Suspensionen zur Erfassung der Dielektrizitätskonstante mindestens eines zwischen den Filterelementen (2; 20; 30) der Filterpresse (1, 1') im Betriebszustand gebildeten Filterkuchens (9) eingesetzt wird, dass die Leiterelektroden (18a) durch den elektrisch isolierenden, feuchtigkeitsundurchlässigen Werkstoff der Presswand (21) vom Filterkuchen (9) beabstandet sind und sich von den Leiterelektroden (18a) elektromagnetische Messfelder durch den elektrisch isolierenden, feuchtigkeitsundurchlässigen Werkstoff der Presswand (21) hindurch in den mindestens einen Filterkuchen (9) erstrecken, und der Sensor (18) aus der Dielektrizitätskonstante einen Wassergehaltswert und/oder einen Leitfähigkeitswert des mindestens einen Filterkuchens (9) ermittelt.

9. Verwendung nach Anspruch 8, **dadurch gekennzeichnet, dass** als Werkstoff für die Presswand ein Kunststoff verwendet wird.

10. Verwendung nach Anspruch 8 oder 9, **dadurch gekennzeichnet, dass** die Leiterelektroden (18a) des Sensors (18) derart in der Presswand (21) angeordnet werden, dass sie quer zu der Ebene, in der sich die Presswand (21) erstreckt, voneinander beabstandet sind.

11. Verwendung nach einem der Ansprüche 8 bis 10, **dadurch gekennzeichnet, dass** der Sensor (18) mittig in der Presswand (21) des Filterelements (2; 20; 30) angeordnet wird.

12. Plattenförmiges Filterelement (2; 20; 30) zur Fest-Flüssig-Trennung von Suspensionen, mit wenigstens einer Presswand (21) und mindestens einer Bohrung (24) zur Ableitung des Filtrats von der Presswand (21) zu einem Filtratablauf (6, 7), wobei die Presswand (21) aus einem elektrisch isolierenden, feuchtigkeitsundurchlässigen Werkstoff besteht, **dadurch gekennzeichnet, dass** in der Presswand (21) wenigstens ein elektromagnetisch arbeitender Sensor (18) angeordnet ist, der zum Bestimmen der Dielektrizitätskonstante mindestens eines an der Presswand (21) angeordneten Filterkuchens (9) zwei voneinander beabstandete Leiterelektroden (18a) aufweist, die durch die Presswand (21) von einem daran angrenzenden Kuchenraum (8) beabstandet sind.

13. Plattenförmiges Filterelement (2; 20; 30) nach Anspruch 12, **dadurch gekennzeichnet, dass** die Presswand (21) aus Kunststoff besteht.

14. Plattenförmiges Filterelement (2; 20; 30) nach Ansprüche 12 oder 13, **dadurch gekennzeichnet, dass** die Leiterelektroden (18a) des Sensors (18) quer und insbesondere normal zu der Ebene, in der sich die Presswand (21) erstreckt, voneinander beabstandet sind.

15. Plattenförmiges Filterelement (2; 20; 30) nach einem der Ansprüche 12 bis 14, **dadurch gekennzeichnet, dass** die Presswand (21) des Filterelements (20) an ihrer dem Kuchenraum (8) zugewandter Oberfläche einen zur Leiterelektrode (18a) des Filterelements (20) benachbarten ersten Oberflächenbereich und einen weiter von dieser entfernten zweiten Oberflächenbereich hat, und dass der erste Oberflächenbereich eben ausgestaltet ist und der zweite Oberflächenbereich vorstehende Noppen (28) aufweist.

## Claims

1. Filter press for the solid/liquid separation of suspensions, comprising several plate-like filter elements (2, 20, 30), which are mounted behind one another and attached together at the side, with a press wall (21) made from an electrically isolating material that is impermeable to moisture, a plate frame (22) and a means of filtering (23), such as a fabric or a membrane, a suspension inlet (5) and a filtrate outlet (6, 7), wherein cake areas (8) are located, in each case, between two adjacent and neighboring filter elements (2, 20, 30) wherein in said spaces filter cakes (9) are formed during operation, **characterized in that** at least one electromagnetic sensor (18) is arranged in the press wall (21) of at least one filter element (2, 20, 30), wherein -for the purpose of determining the dielectric constant of at least a filter cake (9) arranged on the press wall (21) - the sensor has two conductor electrodes (18a) that are space apart and that are spaced at a distance from the cake area (8) by the press wall (21), and **in that** the sensor (18) is connected to an evaluation unit (19) for the purpose of determining a water content value and/or a conductivity value.

2. Filter press as claimed in Claim 1, **characterized in that** the press wall (21) is made of plastic.

3. Filter press as claimed in Claim 1 to 2, **characterized in that** the conductor electrodes (18a) of the sensor (18) are spaced away from one another transversally and particularly perpendicularly to the plane in which the press wall extends (21).

4. Filter press as claimed in one of the Claims 1 to 3, **characterized in that** the sensor (18) is arranged in the center of the press wall (21), transversally in relation to the plane in which the press wall extends (21).

5. Filter press as claimed in one of the Claims 1 to 4, **characterized in that** the conductor electrodes (18a) of the sensor (18) are integrated in the press wall (21).

6. Filter press as claimed in one of the Claims 1 to 5, **characterized in that** the layer thickness of the material of the press wall (21) located between the conductor electrodes (18a) and the neighboring cake area (8) is less than 5 millimeters, particularly less than 4 millimeters and preferably less than 3 millimeters.

7. Filter press as claimed in one of the Claims 1 to 6, **characterized in that** on the surface facing towards the cake area (8) the press wall (21) of the filter element (20) has a first surface area adjacent to the conductor electrode (18a) of the filter element (20) and a second surface area located further away, and **in that** the first surface area is designed as planar and the second surface area has nubs (28) that project out of the surface.

8. Use of a sensor (18) that operates in an electromagnetic manner and has two conductor electrodes (18a) spaced apart, **characterized in that** the sensor (18) is placed in a filter press (1') for the solid/liquid separation of suspensions for the purpose of detecting the dielectric constant of at least one filter cake (9) formed, in the operating state, between the filter elements (2, 20, 30) of the filter press (1, 1'), in such a way that the conductor electrodes (18a) are located at a distance from the filter cake (9) by the electrically isolating material, which is impermeable to moisture, of the press wall (21) and **in that** electromagnetic measuring fields propagate from the conductor electrodes (18a) through the electrically isolating material, which is impermeable to moisture, of the press wall (21) and into the at least one filter cake (9), and wherein the sensor (18) determines a water content value and/or a conductivity value of the at least one filter cake (9) from the dielectric constant.

9. Use as claimed in Claim 8, **characterized in that** a plastic is used as the material for the press wall.

10. Use as claimed in Claim 8 or 9, **characterized in that** the conductor electrodes (18a) of the sensor (18) are arranged in the press wall (21) in such a manner that they are spaced away from one another transversally in relation to the plane in which the press wall extends (21).

11. Use as claimed in one of the Claims 8 to 10, **characterized in that** the sensor (18) is arranged in the center of the press wall (21) of the filter element (2, 20, 30).

12. Plate-like filter element (2, 20, 30) designed for the solid/liquid separation of suspensions, with at least one press wall (21) and at least one borehole (24) to drain off the filtrate from the press wall (21) to a filtrate outlet (6, 7), wherein the press wall (21) is made from an electrically isolating material that is impermeable to moisture, **characterized in that** at least one electromagnetic sensor (18) is arranged in the press wall (21), wherein - for the purpose of determining the dielectric constant of at least one filter cake (9) arranged on the press wall (21) - the sensor has two conductor electrodes (18a) that are spaced apart from one another and are spaced away from an adjacent cake area (8) by the press wall (21).

13. Plate-like filter element (2, 20, 30) as claimed in Claim 12, **characterized in that** the press wall (21) is made from plastic.

14. Plate-like filter element (2, 20, 30) as claimed in Claims 12 or 13, **characterized in that** the conductor electrodes (18a) of the sensor (18) are spaced away from one another transversally and particularly perpendicularly to the plane in which the press wall extends (21).

15. Plate-like filter element (2, 20, 30) as claimed in one of the Claims 12 to 14, **characterized in that** on its surface facing towards the cake area (8) the press wall (21) of the filter element (20) has a first surface area adjacent to the conductor electrode (18a) of the filter element (20) and a second surface area spaced further away, and **in that** the first surface area is designed as planar and the second surface area has nubs (28) that project out of the surface.

## Revendications

1. Filtre-presse destiné à la séparation solide-liquide de suspensions, lequel filtre-presse comprend plusieurs éléments filtrants (2, 20, 30) en forme de plaque, montés les uns derrière les autres, serrés ensemble sur les bords, avec une paroi de pressage (21) constituée d'un matériau électriquement isolant et imperméable à l'humidité, un cadre de plaque (22) et un moyen de filtration (23), tel qu'un tissu ou une membrane, une entrée de suspension (5) et une sortie de filtrat (6, 7), filtre-presse pour lequel des espaces de gâteaux (8) sont à chaque fois présents entre deux éléments filtrants (2, 20, 30) contigus et voisins, espaces dans lesquels se forment des gâteaux de filtre (9) à l'état de fonctionnement, **caractérisé en ce que** dans la paroi de pressage (21) d'au moins un élément filtrant (2, 20, 30) est disposé au moins un capteur (18) fonctionnant de manière électromagnétique, lequel capteur présente - pour déterminer la constante diélectrique d'au moins un gâteau de filtre (9) disposé sur la paroi de pressage (21) - deux électrodes conductrices (18a) espacées l'une de l'autre et qui sont espacées de l'espace de gâteau (8) par la paroi de pressage (21), et **en ce que** le capteur (18) est relié à un dispositif d'évaluation (19) en vue de déterminer une valeur de teneur en eau et/ou une valeur de conductivité.

2. Filtre-presse selon la revendication 1, **caractérisé en ce que** la paroi de pressage (21) est constituée de matière plastique.

3. Filtre-presse selon l'une des revendications 1 à 2, **caractérisé en ce que** les électrodes conductrices (18a) du capteur (18) sont espacées les unes des autres transversalement et notamment perpendiculairement au plan dans lequel s'étend la paroi de pressage (21).

4. Filtre-presse selon l'une des revendications 1 à 3, **caractérisé en ce que** le capteur (18) est disposé au centre de la paroi de pressage (21), transversalement au plan dans lequel s'étend la paroi de pressage (21).

5. Filtre-presse selon l'une des revendications 1 à 4, **caractérisé en ce que** les électrodes conductrices (18a) du capteur (18) sont intégrées dans la paroi de pressage (21).

6. Filtre-presse selon l'une des revendications 1 à 5, **caractérisé en ce que** l'épaisseur de couche du matériau de la paroi de pressage (21) se trouvant entre les électrodes conductrices (18a) et l'espace de gâteau (8) voisin de celles-ci est inférieure à 5 millimètres, notamment inférieure à 4 millimètres et de préférence inférieure à 3 millimètres.

7. Filtre-presse selon l'une des revendications 1 à 6, **caractérisé en ce que** la paroi de pressage (21) de l'élément filtrant (20) présente, sur sa surface tournée vers l'espace de gâteau (8), une première zone de surface voisine de l'électrode conductrice (18a) de l'élément filtrant (20) et une deuxième zone de surface plus éloignée de celle-ci, et **en ce que** la première zone de surface est réalisée de façon plane et la deuxième zone de surface présente des boutons (28) en saillie.

8. Utilisation d'un capteur (18) fonctionnant de manière électromagnétique et présentant deux électrodes conductrices (18a) espacées, **caractérisée en ce que** le capteur (18) est placé dans un filtre-presse (1') destiné à la séparation solide-liquide de suspensions afin de détecter, dans l'état de fonctionnement, la constante diélectrique d'au moins un gâteau de filtre (2, 20, 30) du filtre-presse (1, 1'), de telle sorte que les électrodes conductrices (18a) sont espacées du gâteau de filtre (9) par le matériau électriquement isolant et imperméable à l'humidité de la paroi de pressage (21) et que des champs de mesure électromagnétiques se propagent - à partir des électrodes conductrices (18a) à travers le matériau électriquement isolant et imperméable à l'humidité de la paroi de pressage (21) - dans l'au moins un gâteau de filtre (9), le capteur (18) déterminant une valeur de teneur en eau et/ou une valeur de conductivité de l'au moins un gâteau de filtre (9) à partir de la constante diélectrique.

9. Utilisation selon la revendication 8, **caractérisée en ce qu'**une matière plastique est utilisée comme matériau pour la paroi de pressage.

10. Utilisation selon la revendication 8 ou 9, **caractérisée en ce que** les électrodes conductrices (18a) du capteur (18) sont disposées dans la paroi de pressage (21) de manière à être espacées les unes des autres transversalement au plan dans lequel s'étend la paroi de pressage (21).

11. Utilisation selon l'une des revendications 8 à 10, **caractérisée en ce que** le capteur (18) est disposé au centre de la paroi de pressage (21) de l'élément filtrant (2, 20, 30).

12. Élément filtrant en forme de plaque (2, 20, 30) destiné à la séparation solide-liquide de suspensions, avec au moins une paroi de pressage (21) et au moins un alésage (24) pour l'évacuation du filtrat de la paroi de pressage (21) vers une évacuation de filtrat (6, 7), la paroi de pressage (21) étant constituée d'un matériau électriquement isolant et imperméable à l'humidité, **caractérisé en ce que** dans la paroi de pressage (21) est disposé au moins un capteur (18) fonctionnant de manière électromagnétique, lequel capteur comporte - pour déterminer la constante diélectrique d'au moins un gâteau de filtre (9) disposé sur la paroi de pressage (21) - deux électrodes conductrices (18a) espacées l'une de l'autre et qui sont espacées par la paroi de pressage (21) d'un espace de gâteau (8) adjacent à celle-ci.

13. Élément filtrant en forme de plaque (2, 20, 30) selon la revendication 12, **caractérisé en ce que** la paroi de pressage (21) est en matière plastique.

14. Élément filtrant en forme de plaque (2, 20, 30) selon la revendication 12 ou 13, **caractérisé en ce que** les électrodes conductrices (18a) du capteur (18) sont espacées les unes des autres transversalement et notamment perpendiculairement au plan dans lequel s'étend la paroi de pressage (21).

15. Élément filtrant en forme de plaque (2, 20, 30) selon l'une des revendications 12 à 14, **caractérisé en ce que** la paroi de pressage (21) de l'élément filtrant (20) présente, sur sa surface tournée vers l'espace de gâteau (8), une première zone de surface voisine de l'électrode conductrice (18a) de l'élément filtrant (20) et une deuxième zone de surface plus éloignée de celle-ci, et **en ce que** la première zone de surface est réalisée de façon plane et la deuxième zone de surface présente des boutons (28) en saillie.
